# FASCICULE DE BREVET EUROPEEN

(11) **EP 1 912 395 B1**
(45) Date de publication et mention de la délivrance du brevet: **23.12.2009**
(21) Numéro de dépôt: 07117486.6
(22) Date de dépôt: 28.09.2007
(51) Int. Cl.: H04L 12/58, G06F 17/30

(54) **Serveur de messagerie instantanée apte à notifier l'accessibilité d'une information par un client**
Instant-Messaging-Server, der einem Client die Zugänglichkeit einer Information mitteilen kann
Instant messaging server capable of notifying the accessibility of information by a client

(30) Priorité: 09.10.2006 FR 0654142
(43) Date de publication de la demande: 16.04.2008
(73) Titulaire: FRANCE TELECOM, 75015 Paris (FR)
(72) Inventeur: Arhant-Wibaux, Priscille, 35131, PONT-PEAN (FR); Texier, Hervé, 35230, NOYAL CHATILLON SUR SEICHE (FR)
(74) Mandataire: Delumeau, François Guy

(56) Documents cités:
- WO-A-02/17101
- US-A1- 2003 208 545
- US-A1- 2005 234 883

## Description

### Arrière-plan de l'invention

L'invention concerne un serveur de messagerie instantanée et un procédé pouvant être mis en oeuvre dans ce serveur.

De façon connue, un service de messagerie instantanée ("IM" pour Instant Messaging en anglais) permet, à différents utilisateurs enregistrés à ce service, d'échanger des messages principalement textuels, via le réseau Internet, à l'aide de l'interface d'un client de messagerie instantanée prévue à cet effet.

Dans un tel mécanisme, chaque client de messagerie instantanée envoie son message à un serveur de messagerie instantanée, à charge de ce serveur de transmettre le message vers le client de messagerie instantanée destinataire.

Le document US 2003/208545 décrit un serveur apte à informer un client de messagerie instantanée de l'occurrence d'un événement.

On connaît également, notamment par le document WO 02/17101, un mécanisme dans lequel un client de messagerie instantanée peut interroger, en utilisant un protocole de messagerie instantanée, un serveur distant, en vue d'obtenir une information accessible par ce serveur.

Par exemple, un client peut encapsuler, dans un message instantané, une requête en vue d'obtenir une information boursière, et envoyer ce message à un serveur susceptible de connaître cette information.

Si tel est le cas, le serveur peut envoyer l'Information recherchée dans un message instantané au client émetteur de la requête.

Ce serveur de données, qui se comporte comme un client de messagerie instantanée, est appelé "contact virtuel".

Les mécanismes de messagerie instantanée ayant été prévus pour un dialogue fortement Interactif entre deux utilisateurs, on comprend que le mécanisme précité d'interrogation d'un contact virtuel, fonctionne de façon satisfaisante tant que ce contact virtuel est capable de répondre rapidement à la requête du client.

En effet, si le contact virtuel n'est pas en possession de l'information demandée et qu'il doit la rechercher ou opérer un traitement relativement long, il peut s'écouler un délai important, entre la requête émise par le client et la réponse à cette requête.

En conséquence, cette réponse peut être envoyée au premier client à un moment où celui-ci n'est pas disposé à la recevoir. En ce sens, les mécanismes de messagerie instantanée avec des contacts virtuels connus à ce jour sont intrusifs.

La présente invention vise un nouveau mécanisme de messagerie instantanée dans lequel une information obtenue tardivement par un client de messagerie instantanée peut être envoyée à un autre client de messagerie instantanée de façon non intrusive.

### Objet et résumé de l'invention

Selon un premier aspect, l'invention concerne un serveur de messagerie instantanée et un procédé conformes à l'objet des revendications. :

Dans le contexte de la présente demande, un sondage est un événement apte à indiquer au serveur de messagerie que le deuxième client souhaite connaître la disponibilité de l'information demandée par l'intermédiaire de l'état de présence du premier client.

Conformément à l'invention, lorsque le premier client est en possession de l'information demandée par le deuxième client, il n'envoie pas directement un message instantané à ce deuxième client pour lui fournir l'information demandée.

En ce sens, le procédé et le serveur selon l'invention ne sont pas intrusifs.

Au contraire, l'invention propose d'utiliser un mécanisme de présence, pour signaler au deuxième client que l'information recherchée est disponible auprès du premier client.

C'est donc par une action volontaire que le deuxième client obtient l'information auprès du premier client, à un moment où il est disposé pour ce faire.

Dans un mode particulier de réalisation de l'invention, l'état de présence représentatif du fait que l'information est accessible est enregistré dans une table de présence.

On notera d'ores et déjà que le serveur de messagerie selon l'invention peut par ailleurs, et de façon indépendante, maintenir dans cette table de présence, l'état de présence des différents clients du réseau.

Le serveur de présence selon l'invention comporte :
- des moyens pour détecter l'envoi, par le premier client d'un message instantané à un deuxième client ; et
- des moyens pour modifier, suite à cette détection, l'état de présence, au moins pour ce deuxième client.

Corrélativement, le procédé comprend les étapes suivantes :
- une étape de détection de l'envoi, par ledit premier client d'un message instantané à un deuxième client ; et
- une étape de modification pour modifier, suite à ladite détection, ledit état de présence, au moins pour ce deuxième client.

Bien entendu, le client qui reçoit le message instantané peut être le client qui avait reçu la notification selon laquelle l'information était accessible. C'est le scénario probable dans lequel le client, ayant reçu la notification selon laquelle l'information demandée était disponible, se connecte au serveur, pour recevoir cette information dans un message instantané.

Dans un autre scénario, les clients recevant la notification d'une part et l'information d'autre part sont différents. Cette situation peut notamment se produire lorsque l'un de ces clients n'a pas les moyens matériels ou logiciels pour recevoir la notification ou le message instantané. Dans ce cas, le client qui reçoit la notification donne connaissance à un autre client du fait que l'information est devenue disponible, charge à cet autre client de récupérer l'information auprès du serveur dans un message instantané.

Dans un mode particulier de réalisation de l'invention, l'état de présence représentatif du fait que l'information demandée par un deuxième client est accessible par le premier client, est permanent.

Ceci signifie qu'elle reste enregistrée, par exemple dans la table de présence, tant que le premier client n'a pas envoyé un message instantané à ce deuxième client.

Ainsi, si ce deuxième client se déconnecte et se reconnecte plusieurs fois du réseau de messagerie instantanée, il obtient, en réponse à tout sondage de présence, une notification selon laquelle l'information qu'il recherchait auprès du premier client est disponible.

Dans un mode particulier de réalisation, le serveur de messagerie instantanée selon l'invention gère deux états de présence associés au premier client, à savoir :
- un premier état de présence représentatif de la présence de ce premier client ; et
- un deuxième état de présence représentatif du fait que l'information recherchée par le deuxième client est disponible auprès du premier client.

Dans ce mode particulier de réalisation, le serveur de messagerie revient au premier état de présence suite à la détection d'un envoi d'un message instantané du premier client au deuxième client.

Dans un mode particulier de réalisation de l'invention, les moyens d'envoi du serveur de messagerie sont adaptés à envoyer, sur réception de la première notification, un message d'erreur au premier client, si celui-ci n'est pas autorisé à faire enregistrer cet état de présence.

Ainsi, ce mode de réalisation de l'invention permet d'affecter des droits à un client de messagerie instantanée, lui permettant ou lui interdisant de signaler aux autres clients du réseau le fait qu'il vient d'avoir accès à une information.

Dans un mode particulier de réalisation de l'invention, l'utilisateur d'un client de messagerie instantanée peut lui-même configurer les droits de son client de messagerie instantanée pour lui permettre ou l'empêcher de signaler la disponibilité de l'information.

Dans un mode particulier de réalisation de l'invention, les moyens de réception du serveur de messagerie instantanée sont adaptés à recevoir la première notification conformément au protocole SOAP.

Dans un mode particulier de réalisation de l'invention, les moyens d'envoi du serveur de messagerie instantanée sont adaptés à envoyer la deuxième notification conformément au protocole XMPP.

Dans un mode particulier de réalisation de l'invention, le serveur de messagerie selon l'invention comporte des moyens pour modifier l'état de présence à l'expiration d'un délai prédéterminé compté à partir de l'enregistrement.

Ce mode de réalisation permet de purger régulièrement la table de présence si un client ne vient pas chercher, dans le délai prédéterminé, cette information auprès du premier client.

Dans un mode particulier de réalisation, les différentes étapes du procédé selon l'invention sont déterminées par des instructions de programmes d'ordinateurs.

En conséquence, l'invention vise aussi un programme d'ordinateur sur un support d'informations, ce programme étant susceptible d'être mis en oeuvre dans un serveur de messagerie instantanée ou plus généralement dans un ordinateur, ce programme comportant des instructions adaptées à la mise en oeuvre des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un système de messagerie instantanée comportant un serveur de messagerie tel que mentionné ci-dessus.

L'invention s'applique en particulier lorsque le client de messagerie instantanée qui notifie la mise à disponibilité d'une information, est un contact virtuel.

Mais l'invention s'applique également lorsque les clients de messagerie instantanée sont utilisés par des personnes physiques. Dans ce contexte, elle permet à un utilisateur d'envoyer une notification à un autre utilisateur, plutôt qu'un message intrusif, lui laissant ainsi la possibilité de le contacter ultérieurement, et à son gré, pour obtenir l'information.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un système de messagerie conforme à l'invention dans un mode particulier de réalisation de l'invention ;
- les figures 2A à 2D représentent des tables de présence pouvant être utilisées dans l'invention ; et
- la figure 3 représente, sous forme d'organigramme, les principales étapes d'un procédé conforme à l'invention dans un mode particulier de réalisation.

### Description détaillée d'un mode de réalisation

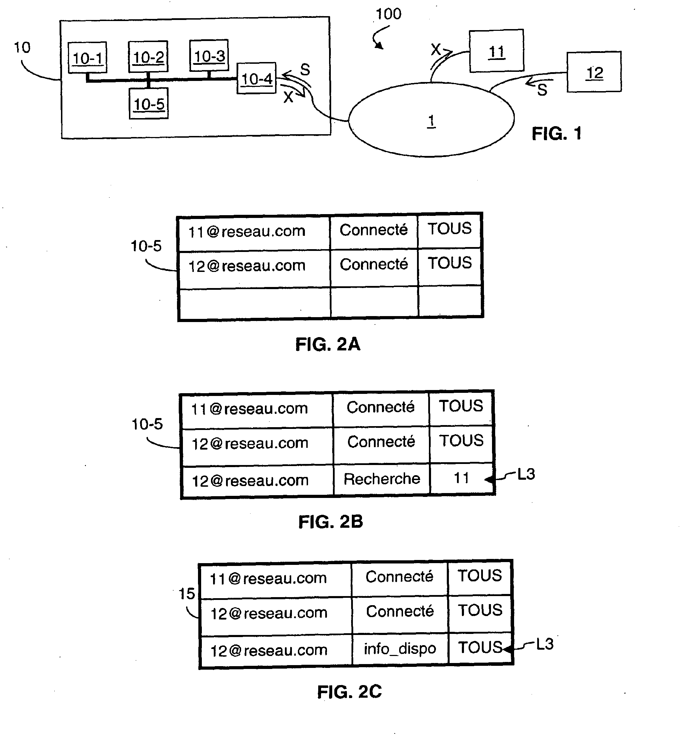

La **figure 1** représente un système 100 de messagerie instantanée conforme à l'invention.

Dans ce système 100, on a référencé 10 un serveur de messagerie instantanée conforme à l'invention.

Dans le mode particulier de réalisation décrit ici, ce serveur de messagerie 10 a l'architecture conventionnelle d'un ordinateur.

Il comporte en particulier un processeur 10-1, une mémoire vive 12, une mémoire morte de type ROM 10-3 et des moyens de communication 10-4 avec un réseau Internet 1. Ces moyens de communication incluent des moyens de réception et des moyens d'émission de données.

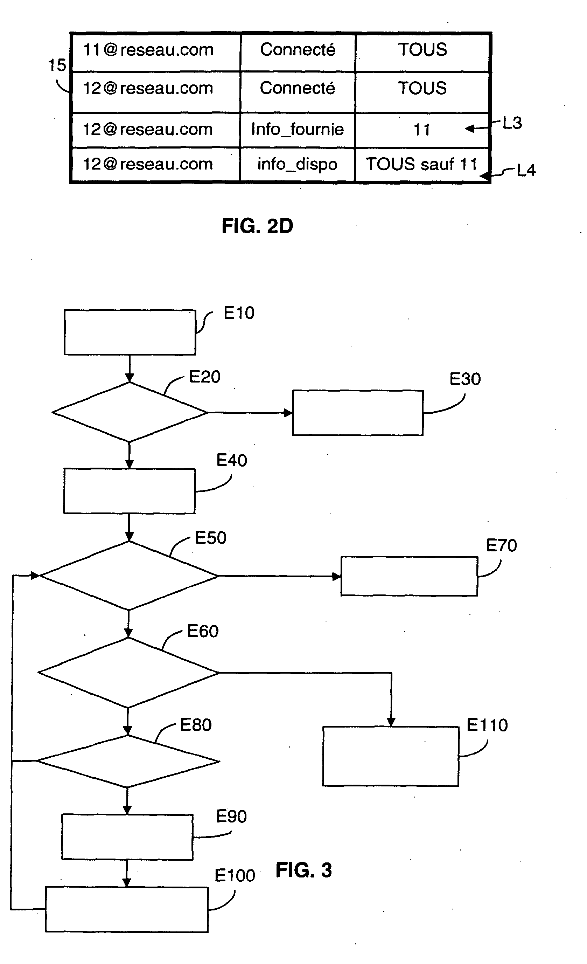

Dans la mémoire morte 10-3, lisible par le processeur 10-1, est enregistré un programme d'ordinateur comprenant des instructions pour l'exécution d'un procédé selon l'invention dont l'organigramme est donné à la figure 3.

Sur la figure 1, on a référencé deux clients de messagerie instantanée, un premier client 12 et un deuxième client 11 connectés au réseau Internet 1.

On suppose que ces deux clients de messagerie instantanée 11 et 12 sont enregistrés dans le service de messagerie instantanée auprès du serveur 10 conforme à l'invention.

De façon connue, le serveur 10 comporte une table de présence 10-5 dans laquelle il mémorise l'état de présence des clients de messagerie instantanée sur le réseau Internet 1.

A la **figure 2A**, on a représenté le contenu de la table de présence 10-5 avant la mise en oeuvre de l'invention.

Chacune des lignes de cette table de présence comporte trois colonnes.

En première colonne, on trouve l'adresse Internet d'un client de messagerie instantanée, en deuxième colonne un état de présence de ce client, et en troisième colonne la liste des clients de messageries instantanées à qui le serveur de messagerie instantanée 10 peut communiquer cet état de présence de ce client en réponse à un sondage de présence.

Dans le mode de réalisation décrit ici, le serveur 10 gère quatre états de présence :
- « connecté » : représentatif du fait que le client est connecté au service de messagerie instantanée ;
- « recherche » : représentatif du fait que le client a reçu une demande d'information mais quelle n'est pas disponible pour le moment ;
- « info_dispo » : représentatif du fait que le client a une demande information disponible pour au moins un autre client ;
- « info_fournie » : représentatif du fait qu'une information disponible pour un client a été fournie à ce client.

Ainsi, conformément à la première ligne de la table 10-5 de la figure 2A, l'état de présence du deuxième client 11, d'adresse Internet 11@réseau.com, représentatif du fait que ce client est connecté au service de messagerie instantanée doit être communiqué à tout client de messagerie instantanée, en réponse à un sondage de présence de ce deuxième client.

Dans l'exemple décrit ici, nous supposerons que le premier client de messagerie instantanée 12 est un contact virtuel, à savoir un serveur de données.

Nous supposerons également que le deuxième client de messagerie instantanée 11 a émis une requête, via le service de messagerie instantanée, au contact virtuel 12 pour obtenir une information.

En pratique, cette requête transite via le serveur de messagerie instantanée 10.

Nous supposerons également que l'information demandée par le deuxième client 11 n'est pas accessible par le contact virtuel 12.

Dans ce mode particulier de réalisation de l'invention, le contact virtuel 12 émet, via le système de messagerie instantanée, un message vers le premier client 11 pour lui indiquer que l'information recherchée sera disponible ultérieurement.

Simultanément, le serveur 10 selon l'invention, enregistre dans une ligne L3 de la table 10-5, un état de présence « recherche » représentatif du fait que le premier client 12 a reçu une demande d'information du deuxième client 11 mais qu'elle n'est pas disponible pour le moment.

Cette table est représentée à la **figure 2B****.**

Nous nous plaçons maintenant au moment où le contact virtuel 12 obtient l'information recherchée.

Conformément à l'invention, le contact virtuel 12 envoie, vers le serveur 10 de messagerie instantanée conforme à l'invention, une première notification S représentative de la disponibilité de cette information.

Dans l'exemple décrit ici, cette première notification S est émise conformément au protocole SOAP.

Nous allons maintenant décrire, en référence à la **figure 3**, le procédé conforme à l'invention mis en oeuvre dans le serveur de messagerie instantanée 10.

Au cours d'une première étape E10, le serveur de messagerie instantanée 10 reçoit la première notification S émise par le contact virtuel 12.

Cette étape E10 de réception est suivie par un test E20 au cours duquel le serveur de messagerie 10 vérifie si le contact virtuel 12 est autorisé à envoyer cette première notification S.

Lorsque ce n'est pas le cas, le résultat du test E20 est négatif. Ce test est suivi par une étape E30 au cours de laquelle le serveur de messagerie 10 envoie un message d'erreur au contact virtuel 12.

Nous supposerons dans cet exemple que le contact virtuel 12 est autorisé à émettre cette première notification vers le serveur de messagerie 10.

Cette autorisation peut par exemple être matérialisée par l'enregistrement de droits spécifiques dans une table de configuration du contact virtuel 12.

Puisque le contact virtuel 12 est autorisé à émettre cette première notification, le résultat du test E20 de contrôle est positif.

Ce test est alors suivi par une étape E40 au cours de laquelle le serveur de messagerie 10 enregistre, dans la table de présence 10-5, un état de présence « info_dispo » associé au contact virtuel 12 représentatif du fait que l'information demandée par le deuxième client 11 est disponible auprès du contact virtuel 12.

Dans l'exemple de réalisation décrit ici, cet état de présence « info_dispo » peut être communiqué à tous les clients de messagerie instantanée en réponse à tout sondage de présence.

La **figure 2C** représente la table de présence 10-5 après l'enregistrement de cet état dans une ligne L3.

Dans ce mode particulier de réalisation de l'invention, le serveur de messagerie 10 maintient l'état de présence « info_dispo » dans la table de présence 10-5 jusqu'à expiration d'un délai prédéterminé compté à partir de l'enregistrement.

Afin de vérifier si cette condition est vérifiée, le serveur de messagerie 10 déclenche un compteur consécutivement à l'enregistrement de l'état de présence « info_dispo ».

Puis, au cours d'un test E50, le serveur de messagerie 10 vérifie si le délai prédéterminé est expiré.

Si tel est le cas, le test E50 est suivi par une étape E70 au cours de laquelle le serveur de messagerie 10 efface la ligne L3 de la table de présence 10-5.

Si le délai n'est pas écoulé, le serveur de messagerie 10 vérifie, au cours d'un test E60, si le contact virtuel 12 a émis un message instantané vers le deuxième client de messagerie instantanée 11.

Si tel n'est pas le cas, le résultat du test E60 est négatif. Ce test E60 est alors suivi par un test E80 au cours duquel le serveur de messagerie 10 détermine si un sondage de présence a été effectué par le deuxième client de messagerie instantanée 11.

Si tel n'est pas le cas, le test E80 est suivi par le test E50 déjà décrit au cours duquel le serveur de messagerie 10 détermine si le délai prédéterminé compté à partir de l'enregistrement E40 est expiré.

Nous considérons maintenant que le deuxième client de messagerie instantanée 11 a effectué un sondage de présence et le résultat du test E80 est positif.

Ce test E80 est alors suivi par une étape E90 au cours de laquelle le serveur de messagerie 10 lit la table de présence 10-5 et y trouve l'état de présence « info_dispo » représentatif du fait que l'information demandée par le deuxième client de messagerie instantanée est disponible auprès du contact virtuel 12.

Cette étape E90 de lecture est suivie par une étape E100 au cours de laquelle le serveur de messagerie instantanée 10 envoie au deuxième client de messagerie instantanée 11 une notification représentative de cet état de présence.

Dans l'exemple de réalisation décrit ici, cette notification X est émise conformément au protocole XMPP.

Ainsi, le deuxième client de messagerie instantanée 11 obtient connaissance du fait que l'information est maintenant disponible auprès du contact virtuel 12.

Il peut alors émettre un message instantané, via le serveur 10, à destination du contact virtuel 12.

Lorsque le contact virtuel 12 reçoit ce message instantané, il y répond par l'envoi d'un message instantané contenant l'information recherchée.

Ce dernier message instantané est détecté par le serveur de messagerie instantanée 10 au cours du test E60 précité et le résultat de ce test E60 est positif.

Le serveur de messagerie 10 considère que ce message comportait l'information recherchée par le deuxième client de messagerie 11, et modifie, au cours d'une étape E110, l'état de présence de la ligne L3 de la table 10-5.

Dans l'exemple décrit ici, cet état de présence passe à la valeur « info_fournie ».

Simultanément, le serveur 10 créé une nouvelle ligne L4 dans la table 10-5 dans laquelle il enregistre l'état de présence « info_dispo » pour tous les clients de messagerie autres que le deuxième client 11.

La **figure 2D** représente la table de présence 10-5 après ce nouvel enregistrement.

Dans l'exemple de réalisation décrit ici, les deux lignes L3 et L4 sont effacées à l'expiration du délai prédéterminé compté à partir de l'enregistrement de l'étape E50.

Dans un autre mode de réalisation, le serveur 10 de messagerie conforme à l'invention ne gère que deux états de présence, à savoir :
- un premier état de présence représentatif du fait que le client 12 est connecté au service de messagerie ; et
- un deuxième état de présence représentatif du fait qu'une information est disponible pour le deuxième client 11.

Dans ce mode particulier de réalisation, le serveur de messagerie 10 revient au premier état de présence dès que le client virtuel 12 envoie un message instantané au deuxième client 11.

## Revendications

1. Serveur (10) de messagerie instantanée comportant :
- des moyens (10-4) de réception, en provenance d'un premier client (12) de messagerie instantanée, d'une première notification (S) représentative de la disponibilité d'une information pour au moins un deuxième client;
- des moyens (11) pour enregistrer, un état de présence associé audit premier client (12), représentatif du fait que ladite information est disponible pour ledit au moins un deuxième client ;
- des moyens (10-4) pour envoyer (E100), à un deuxième client (11) de messagerie instantanée, une deuxième notification (X) représentative dudit état de présence, en réponse à tout sondage de présence (E80) effectué par ledit deuxième client (11);
ledit serveur étant **caractérisé en ce qu'**il comporte:
- des moyens pour détecter l'envol, par ledit premier client (12) d'un message instantané à un deuxième client (11) ; et
- des moyens pour modifier, suite à ladite détection, ledit état de présence, au moins pour ce deuxième client (11).

2. Serveur (10) de messagerie instantanée selon la revendication 1, **caractérisé en ce qu'**il gère deux états de présence associés audit premier client (12), à savoir :
- un premier état de présence représentatif de la présence dudit premier client (12) ; et
- un deuxième état de présence représentatif du fait que ladite Information est disponible auprès du premier client;

3. serveur selon la revendication 2, **caractérisé en ce que** l'état de présence revient audit premier état de présence suite à ladite détection.

4. Serveur de messagerie selon l'une quelconque des revendications 1 à 3, **caractérisé en ce que** lesdits moyens d'envoi (10-4) sont adaptés à envoyer (E30), sur réception de ladite première notification (5), un message d'erreur audit premier client (12), si celui-ci (12) n'est pas autorisé à faire enregistrer ledit état de présence.

5. Serveur de messagerie selon l'une quelconque des revendications 1 à 4, **caractérisé en ce qu'**il comporte des moyens (11) pour modifier (E70) ledit état de présence à l'expiration (E50) d'un délai prédéterminé compté à partir dudit enregistrement.

6. Système (100) de messagerie instantanée comportant un serveur de messagerie (10) selon l'une quelconque des revendications 1 à 5.

7. Système (100) de messagerie instantané selon la revendication 6, dans lequel ledit premier client (12) est un client virtuel.

8. Procédé pouvant être mis en oeuvre dans un serveur (10) de messagerie instantanée, permettant à un premier client (12) de messagerie instantanée d'envoyer une information à un deuxième client (11) de messagerie instantanée, ce procédé comportant :
- une étape (E10) de réception, en provenance dudit premier client (12) de messagerie instantanée, d'une première notification (S) représentative de la disponibilité d'une information pour au moins un deuxième client;
- une étape (E40) d'enregistrement d'un état de présence associé premier client (12), représentatif du fait que ladite information est disponible pour ledit au moins un deuxième client;
- une étape (E100) d'envoi, à un deuxième client (11), d'une deuxième notification (X) représentative dudit état de présence, en réponse à tout sondage de présence (E80) effectué par ledit deuxième client (11); ledit procédé étant **caractérisé en ce qu'**il comporte :
- une étape de détection de l'envoi, par ledit premier client (12) d'un message instantané à un deuxième client (11) ; et
- une étape de modification pour modifier, suite à ladite détection, ledit état de présence, au moins pour ce deuxième client (11).

9. Programme d'ordinateur comportant des instructions pour l'exécution des étapes du procédé selon la revendication 8 lorsque ledit programme est exécuté par un ordinateur (10).

10. Support d'enregistrement (10-3) lisible par un ordinateur (10) sur lequel est enregistré un programme d'ordinateur comprenant des Instructions pour l'exécution des étapes du procédé selon la revendication 8.

## Claims

1. Instantaneous messaging server (10) comprising:
- means (10-4) for receiving, from a first instantaneous messaging client (12), a first notification (S) representative of the availability of an item of information for at least one second client;
- means (11) for recording a state of presence associated with the said first client (12), representative of the fact that the said item of information is available for the said at least one second client;
- means (10-4) for sending (E100), to a second instantaneous messaging client (11), a second notification (X) representative of the said state of presence, in response to any presence polling (E80) made by the said second client (11);
the said server being **characterized in that** it comprises:
- means for detecting the transmission, by the said first client (12) of an instantaneous message to a second client (11); and
- means for modifying, following the said detection, the said state of presence, at least for this second client (11).

2. Instantaneous messaging server (10) according to Claim 1, **characterized in that** it manages two states of presence associated with the said first client (12), namely:
- a first state of presence representative of the presence of the said first client (12); and
- a second state of presence representative of the fact that the said item of information is available with the first client.

3. Server according to Claim 2, **characterized in that** the state of presence returns to the said first state of presence following the said detection.

4. Messaging server according to any one of Claims 1 to 3, **characterized in that** the said transmission means (10-4) are suitable for transmitting (E30), on receipt of the said first notification (S), an error message to the said first client (12), if the latter (12) is not authorized to have the said state of presence recorded.

5. Messaging server according to any one of Claims 1 to 4, **characterized in that** it comprises means (11) for modifying (E70) the said state of presence on expiry (E50) of a predetermined delay starting from the said registration.

6. Instantaneous messaging system (100) comprising a messaging server (10) according to any one of Claims 1 to 5.

7. Instantaneous messaging system (100) according to Claim 6, in which the said first client (12) is a virtual client.

8. Method that can be used in an instantaneous messaging server (10) making it possible for a first instantaneous messaging client (12) to send an item of information to a second instantaneous messaging client (11), this method comprising:
- a step (E10) for receiving, from the said first instantaneous messaging client (12), a first notification (S) representative of the availability of an item of information for at least one second client;
- a step (E40) for recording a state of presence associated with the first client (12), representative of the fact that the said item of information is available for the said at least one second client;
- a step (E100) for transmitting, to a second client (11), a second notification (X) representative of the said state of presence, in response to any polling of presence (E80) carried out by the said second client (11);
the said method being **characterized in that** it comprises:
- a step of detecting the transmission, by the said first client (12), of an instantaneous message to a second client (11); and
- a step of modification in order to modify, following the said detection, the said state of presence, at least for this second client (11).

9. Computer program comprising instructions for the execution of the steps of the method according to Claim 8 when the said program is run by a computer (10).

10. Recoding medium (10-3) that can be read by a computer (10) on which a computer program is recorded comprising instructions for the execution of the steps of the method according to Claim 8.

## Patentansprüche

1. Instant-Messaging-Server (10), der aufweist:
- Einrichtungen (10-4) für den Empfang einer ersten Benachrichtigung (S), die für die Verfügbarkeit einer Information für mindestens einen zweiten Client repräsentativ ist, von einem erstem Instant-Messaging-Client (12);
- Einrichtungen (11), um einen dem ersten Client (12) zugeordneten Präsenzzustand aufzuzeichnen, der für die Tatsache repräsentativ ist, dass die Information für den mindestens einen zweiten Client zur Verfügung steht;
- Einrichtungen (10-4), um als Antwort auf jede von einem zweiten Instant-Messaging-Client (11) durchgeführte Präsenz-Stichprobe (E80) an den zweiten Client (11) eine zweite Benachrichtigung (X) zu senden (E100), die für den Präsenzzustand repräsentativ ist,;
wobei der Server **dadurch gekennzeichnet ist, dass** er enthält:
- Einrichtungen zur Erfassung des Sendens einer Instant-Message an einen zweiten Client (11) durch den ersten Client (12); und
- Einrichtungen, um nach der Erfassung den Präsenzzustand zumindest für diesen zweiten Client (11) zu ändern.

2. Instant-Messaging-Server (10) nach Anspruch 1,
**dadurch gekennzeichnet, dass** er zwei dem ersten Client (12) zugeordnete Präsenzzustände verwaltet, nämlich:
- einen ersten Präsenzzustand, der für die Präsenz des ersten Clients (12) repräsentativ ist; und
- einen zweiten Präsenzzustand, der für die Tatsache repräsentativ ist, dass die Information beim ersten Client zur Verfügung steht.

3. Server nach Anspruch 2, **dadurch gekennzeichnet, dass** der Präsenzzustand nach der Erfassung zum ersten Präsenzzustand zurückkommt.

4. Messaging-Server nach einem der Ansprüche 1 bis 3, **dadurch gekennzeichnet, dass** die Sendeeinrichtungen (10-4) geeignet sind, um bei Empfang der ersten Benachrichtigung (S) eine Fehlermeldung an den ersten Client (12) zu senden (E30), wenn dieser (12) nicht berechtigt ist, den Präsenzzustand aufzeichnen zu lassen.

5. Messaging-Server nach einem der Ansprüche 1 bis 4, **dadurch gekennzeichnet, dass** er Einrichtungen (11) aufweist, um den Präsenzzustand bei Ablauf (E50) einer vorbestimmten Frist zu ändern (E70), die ab der Aufzeichnung gezählt wird.

6. Instant-Messaging-System (100), das einen Messaging-Server (10) nach einem der Ansprüche 1 bis 5 aufweist.

7. Instant-Messaging-System (100) nach Anspruch 6, bei dem der erste Client (12) ein virtueller Client ist.

8. Verfahren, das in einem Instant-Messaging-Server (10) durchgeführt werden kann und es einem ersten Instant-Messaging-Client (12) ermöglicht, eine Information an einen zweiten Instant-Messaging-Client (11) zu senden, wobei dieses Verfahren aufweist:
- einen Schritt (E10) des Empfangs vom ersten Instant-Messaging-Client (12) einer ersten Benachrichtigung (S), die für die Verfügbarkeit einer Information für mindestens einen zweiten Client repräsentativ ist;
- einen Schritt (E40) der Aufzeichnung eines dem ersten Client (12) zugeordneten Präsenzzustands, der für die Tatsache repräsentativ ist, dass die Information für den mindestens einen zweiten Client zur Verfügung steht;
- einen Schritt (E100) des Sendens einer zweiten, für den Präsenzzustand repräsentativen Benachrichtigung (X) an einen zweiten Client (11) als Antwort auf jede vom zweiten Client (11) durchgeführte Präsenz-Stichprobe (E80);
wobei das Verfahren **dadurch gekennzeichnet ist, dass** es aufweist:
- einen Schritt der Erfassung des Sendens einer Instant-Message an einen zweiten Client (11) durch den ersten Client (12); und
- einen Schritt der Veränderung, um nach der Erfassung den Präsenzzustand für mindestens diesen zweiten Client (11) zu verändern.

9. Computerprogramm, das Anweisungen für die Durchführung der Schritte des Programms nach Anspruch 8 aufweist, wenn das Programm von einem Computer (10) durchgeführt wird.

10. Aufzeichnungsträger (10-3), der von einem Computer (10) lesbar ist und auf dem ein Computerprogramm aufgezeichnet ist, das Anweisungen für die Durchführung der Schritte des Verfahrens nach Anspruch 8 enthält.
